# EUROPEAN PATENT APPLICATION

(11) **EP 4 667 072 A1**
(43) Date of publication of application: **24.12.2025**
(21) Application number: 25178211.6
(22) Date of filing: 22.05.2025
(51) Int. Cl.: A63F 13/45, G01C 22/00, G06F 3/01, G06F 3/04817, G06F 3/0482

(54) **CONTROL METHOD, SERVER, INFORMATION PROCESSING DEVICE, DISPLAY SYSTEM, AND PROGRAM**

(30) Priority: 17.06.2024 JP 2024097269
(71) Applicant: Casio Computer Co., Ltd., Tokyo 151-8543 (JP)
(72) Inventor: Sugawa, Chiori, Hamura-shi, Tokyo 205-8555 (JP)
(74) Representative: Grünecker Patent- und Rechtsanwälte PartG mbB

(57) **Abstract**

Disclosed is a method for controlling a display device 2 that includes a first screen 242 displaying icons 40 and a second screen 243 displaying symbols 50, including: determining whether a first condition is satisfied, and in response to the first condition being satisfied, selecting one icon 40 and allowing the selected icon 40 to be displayed on the first screen 242; and determining whether a second condition related to selecting the icon 40 is satisfied, and in response to the second condition being satisfied, selecting a symbol 50 corresponding to the selected icon 40 and allowing the selected symbol 50 to be displayed on the second screen 243. When none of the symbols 50 is allowed to be displayed on the second screen 243, the selecting one icon includes selecting a specific icon 40 corresponding to a predetermined specific symbol 50. When one or more of the symbols 50 are allowed to be displayed on the second screen 243, the selecting one icon includes randomly selecting an icon 40.

## Description

### TECHNICAL FIELD

The present invention relates to a control method, a server, an information processing device, a display system, and a program.

### DESCRIPTION OF RELATED ART

Conventionally, as in JP 2016-116793A, a server has been disclosed that provides a service in which a badge (icon) is displayed on a display as a reward when a predetermined condition is satisfied.

However, when one icon is randomly selected from a plurality of icons to be displayed as a reward, there is a problem that an icon a user desires is not easily displayed, causing the user to quickly stop using the service.

### SUMMARY OF THE INVENTION

A control method according to one embodiment of the present invention is a method executed by a computer for controlling a display device 2 that includes a first screen 242 displaying a list of icons 40 included in a group of icons 40 and a second screen 243 displaying a list of symbols 50 included in a group of symbols 50, comprising: determining as to whether a first condition is satisfied, and in response to the first condition being satisfied, selecting one icon 40 from the group of icons 40 and allowing the selected icon 40 to be displayed on the first screen 242; and determining as to whether a second condition related to selecting the icon 40 is satisfied, and in response to the second condition being satisfied, selecting a symbol 50 corresponding to the selected icon 40 and allowing the selected symbol 50 to be displayed on the second screen 243, wherein: when none of the symbols 50 in the group of symbols 50 is allowed to be displayed on the second screen 243, the selecting one icon includes selecting a specific icon 40 corresponding to a predetermined specific symbol 50 in the group of symbols 50; and when one or more of the symbols 50 in the group of symbols 50 are allowed to be displayed on the second screen 243, the selecting one icon includes randomly selecting an icon 40.

### BRIEF DESCRIPTION OF DRAWINGS

The advantages and features provided by one or more embodiments of the disclosure will become more fully understood from the detailed description given hereinbelow and the appended drawings which are given by way of illustration only, and thus are not intended as a definition of the limits of the present disclosure, wherein:
FIG. 1 is a block diagram illustrating a configuration of a display system;
FIG. 2 is a diagram illustrating a badge acquisition screen on which a badge list screen is displayed;
FIG. 3 is a diagram illustrating the badge acquisition screen on which a character list screen is displayed;
FIG. 4 is a flowchart illustrating a flow of a display process executed by a controller of a server in FIG 1;
FIG. 5 is a flowchart illustrating a flow of the display process executed by the controller of the server in FIG 1;
FIG. 6 is a diagram illustrating a badge display region of FIG. 2 divided into a plurality of regions;
FIG. 7 is a diagram illustrating the badge list screen with a first badge selected and displayed;
FIG. 8 is a diagram illustrating the badge list screen with badges selected and displayed for a first row; and
FIG. 9 is a diagram showing another example of the badge acquisition screen on which the character list screen is displayed.

### DETAILED DESCRIPTION

Hereinafter, one or more embodiments of the present invention will be described with reference to the drawings. However, the embodiments described below are subject to various technically preferred limitations for implementing the present invention. Therefore, the technical scope of the present invention is not limited to the following embodiments and illustrated examples.

Conventionally, there has been known a service in which a badge (icon) is displayed on a display as a reward when a predetermined condition is satisfied. However, when one badge is randomly selected from a plurality of badges to be displayed as a reward, there is a problem that a user's desired badge is not easily displayed, causing the user to quickly stop using the service. In view of the above problem, a control method, a server, and a recording medium according to the present invention disclosed in the embodiments described below are intended to facilitate a user to continue using a service in which an icon is displayed when a predetermined condition is satisfied.

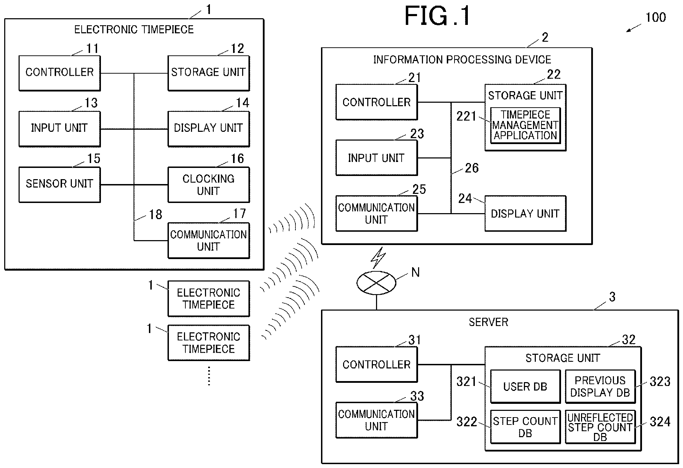

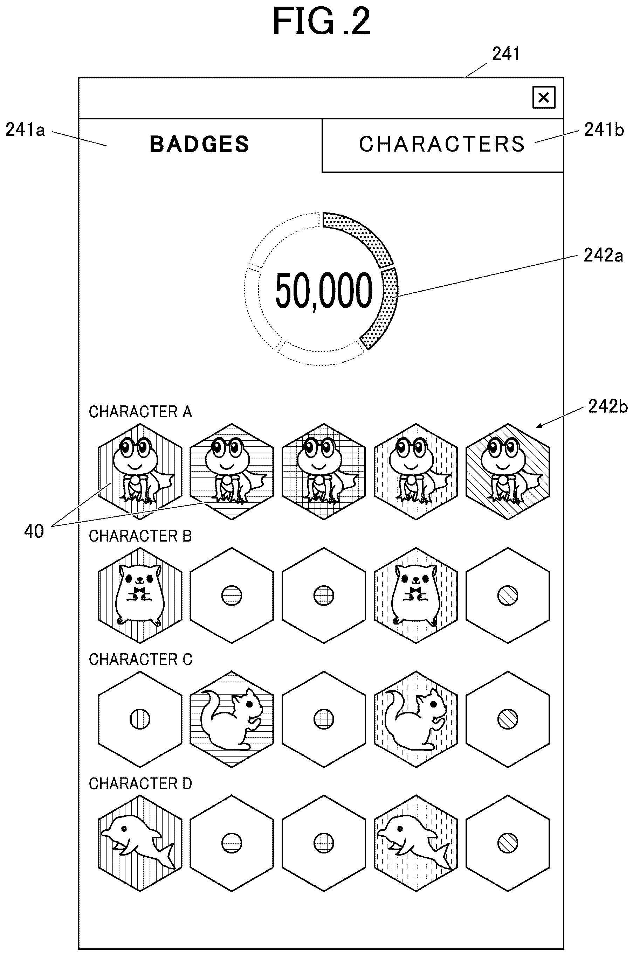

First, a configuration of a display system 100 according to the present embodiment will be described. As illustrated in FIG. **1****,** the display system 100 includes electronic timepieces **1,** an information processing device **2,** and a server **3.** Each of the electronic timepieces 1 is an electronic timepiece or a smart watch that can count the number of steps taken by a user. The information processing device 2 acquires the number of steps measured by the electronic timepiece 1 worn by the user via a communication section 25 and transmits the acquired number of steps to the server 3. As the information processing device 2, for example, a terminal device or a display device such as a smartphone, a tablet terminal, or a personal computer (PC) can be used. When the number of steps transmitted from the information processing device 2 satisfies a predetermined condition, the server 3 causes the information processing device 2 to display badges 40 (see FIG. 2). It is assumed that the information processing device 2 manages a plurality of electronic timepieces 1, but this is not particularly limited. Furthermore, the number of information processing devices 2 is not particularly limited.

As illustrated in FIG. 1, the electronic timepiece 1 includes a controller 11, a storage unit 12, an input unit 13, a display unit 14, a sensor unit 15, a clocking unit 16, and a communication unit 17, and each unit is coupled via a bus 18.

The controller 11 includes a central processing unit (CPU), a random-access memory (RAM), and the like, and controls each unit of the electronic timepiece 1. The CPU of the controller 11 reads out a specified program from among the system programs and various processing programs stored in the storage unit 12, develops the read program into the RAM, and executes various processes in cooperation with the developed program. Examples of the processes executed by the controller 11 include a process of calculating the number of steps taken by the user based on measurement information of the sensor unit 15, a process of transmitting the number of steps to the information processing device 2, and the like.

The controller 11 may have a plurality of CPUs. A plurality of processes executed by the controller 11 in the present embodiment may be executed by the plurality of CPUs. In this case, the plurality of CPUs may be involved in a common process. Alternatively, the plurality of CPUs may independently execute different processes in parallel.

The storage unit 12 includes a non-volatile memory or the like and stores programs, data, and the like. The storage unit 12 is not limited to the one built in the electronic timepiece 1 and may include an external recording medium detachable from the electronic timepiece 1.

For example, the storage unit 12 stores the system programs of the electronic timepiece 1, programs for executing various processes, and the like. The storage unit 12 also stores an individual ID for identifying the model and individual of the electronic timepiece 1 (its own device). The storage unit 12 also stores the number of steps taken by the user calculated based on the measurement information of the sensor unit 15.

The input unit 13 accepts an external input operation such as a user operation. The input unit 13 includes, for example, a crown and a push-button switch and outputs a signal corresponding to an operation of the crown or the push-button switch to the controller 11. Alternatively, the input unit 13 may include a touch screen.

The display unit 14 includes a display such as a liquid crystal display (LCD) or an organic light emitting diode (OLED), and performs display based on a control operation of the controller 11.

The sensor unit 15 includes at least an acceleration sensor, obtains measurement information on acceleration or the like, and outputs the measurement information to the controller 11.

The clocking unit 16 includes an oscillation circuit, a frequency dividing circuit, a clocking circuit, and the like, clocks the current date and time, and outputs a clocked result to the controller 11.

The communication unit 17 performs communication control for communicating with an external device such as the information processing device 2 by a predetermined communication method such as Bluetooth (registered trademark) .

As illustrated in FIG. 1, the information processing device 2 includes a controller 21, a storage unit 22, an input unit 23, a display unit 24, and a communication unit 25, and each unit is coupled via a bus 26.

The controller 21 includes a CPU, a RAM, and the like and controls each unit of the information processing device 2. The CPU of the controller 21 reads out a specified program from among the system programs and various application programs stored in the storage unit 22, develops the read program in the RAM, and executes various processes in cooperation with the developed program. The controller 21 may have a plurality of CPUs. A plurality of processes executed by the controller 21 in the present embodiment may be executed by the plurality of CPUs. In this case, the plurality of CPUs may be involved in a common process. Alternatively, the plurality of CPUs may independently execute different processes in parallel.

The storage unit 22 includes a non-volatile semiconductor memory, a hard disk drive HDD), or the like. The storage unit 22 is not limited to the one built into the information processing device 2 and may include an external recording medium such as a memory card that is detachable from the information processing device **2.**

The storage unit 22 stores the system programs of the information processing device **2,** various application programs, and data required for executing the programs. For example, the storage unit 22 stores a timepiece management application 221. Functions provided by the timepiece management application 221 include a function of acquiring the number of steps from the electronic timepiece 1 owned by the user, a function of transmitting the number of steps acquired from the electronic timepiece 1 to the server **3,** a function of providing a badge acquisition service provided by the server 30 to the user, and the like. The badge acquisition service is a service that gives a badge 40 (see FIG. 2) to the user every time the user reaches a predetermined number of steps.

The storage unit 22 also stores user registration information of the user who uses the service of the timepiece management application 221. The user registration information includes, for example, a user ID, password, user name, age, gender, place of residence (prefecture, and the like), and the model and individual ID of the electronic timepiece 1 owned by the user.

The input unit 23 includes a keyboard having various keys and a pointing device such as a mouse, or a touch screen attached to the display unit 24, or the like. The input unit 23 outputs to the controller 21 a key input signal corresponding to a key input by a user operation and an operation signal on a screen.

The display unit 24 includes a display such as a liquid crystal display or an organic EL display. The display unit 24 performs display based on a control operation of the controller 21.

The communication unit 25 performs communication control for communicating with an external device via a wireless LAN such as Wi-Fi (registered trademark), a communication network N including a mobile phone communication network and the Internet, Bluetooth (registered trademark), or the like. In the present embodiment, the communication unit 25 communicates with the electronic timepiece 1 via Bluetooth (registered trademark) or the like and communicates with the server 3 via the communication network **N.**

The server 3 includes a controller 31, a storage unit 32, a communication unit 33, and the like. The controller 31 includes a CPU, a RAM, and the like and controls each unit of the server **3.** The CPU of the controller 31 reads out a specified program from among the system programs and various processing programs stored in the storage unit 32, develops the read program into the RAM, and executes various processes in cooperation with the developed program. The controller 31 may have a plurality of CPUs. A plurality of processes executed by the controller 31 in the present embodiment may be executed by the plurality of CPUs. In this case, the plurality of CPUs may be involved in a common process. Alternatively, the plurality of CPUs may independently execute different processes in parallel.

The storage unit 32 includes a non-volatile semiconductor memory, a HDD, or the like. The storage unit 32 is not limited to the one built into the server 3 and may include an external recording medium detachable from the server 3.

The storage unit 32 stores a user database (DB) 321, a step count DB 322, a previous display DB 323, an unreflected step count DB 324, and the like. The user DB 321 stores the user registration information of the user of the timepiece management application 221. In association with the user ID, the step count DB 322 stores the number of steps transmitted from the information processing device 2 together with the user ID. In association with the user ID, the previous display DB 323 stores various kinds of information (previous display information) when the previous badge acquisition screen 241 (see FIG. 2) is displayed on the information processing device 2 logged in with the user ID. The information stored in the previous display DB 323 includes, for example, information on the number of steps reflected in a gauge 242a of the badge acquisition screen 241 (referred to as gauge information), the type and position information of a badge 40 that has been acquired (displayed), information on a released region, information on a character for which a character image 50 has been acquired, and the like. In association with the user ID, the unreflected step count DB 324 stores information on the number of steps of the user corresponding to the user ID that has not yet been reflected in a display of the badge acquisition screen 241 (unreflected step count).

The communication unit 33 communicates with the information processing device 2 via the communication network N. The communication unit 33 serves as an acquisition unit.

The badge acquisition screen 241 will be described below. The badge acquisition screen 241 is a screen for providing the badge acquisition service to the user. The badge acquisition screen 241 is displayed on the display unit 24 in cooperation with the controller 21 and the timepiece management application 221 under the control of the server 3.

As illustrated in FIG. 2, a badge display tab 241a and a character display tab 241b are displayed on the badge acquisition screen 241. When the badge display tab 241a is selected, a badge list screen 242 (first screen) for displaying a list of acquired badges 40 is displayed on the badge acquisition screen 241. Each of the badges 40 is a badge-type icon that is given (displayed) each time the number of steps acquired from the electronic timepiece 1 worn by the user reaches a predetermined condition. On the badge list screen 242, a badge 40 corresponding to each of 16 character types can be displayed in five colors. That is, 80 badges 40 can be displayed on the badge list screen 242. Each badge 40 has a monochrome picture of the corresponding character. Each of the 16 character types is a symbol of each brand (16 brand types) of the electronic timepiece 1. In the present embodiment, the 16 character types are referred to as Character A to Character **P.**

The badge list screen 242 includes a gauge 242a and a badge display region 242b. The gauge 242a is a graphic that indicates the number of steps required to acquire (display) the next badge 40 and how many of those steps have been taken. The badge display region 242b is a region for displaying a list of badges 40 (icons) acquired by the user among a plurality of badges 40 (group of icons) that the user can acquire. In the present embodiment, a total of 80 squares, 5 squares × 16 rows, for displaying the badges 40 in sequence are displayed in the badge display region 242b. Each row of the badge display region 242b corresponds to one of the 16 character types described above. The squares in each row are the display positions of the badges 40 of the character corresponding to that row. Badges 40 of the same color are displayed in the squares of the same column.

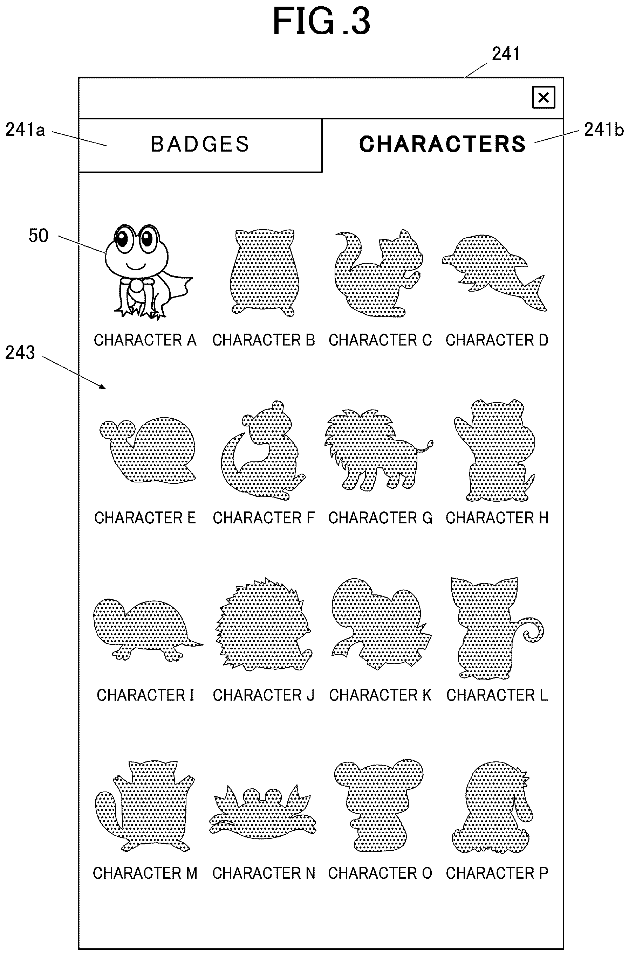

Furthermore, when the character display tab 241b is selected on the badge acquisition screen 241, a character list screen 243 (second screen) illustrated in FIG. 3 is displayed. On the character list screen 243, silhouettes of the above-mentioned 16 character types are displayed in a list. When all the badges 40 are displayed (collected) in the squares for one row on the badge list screen 242, a character image 50 of the character corresponding to that row is displayed on the character list screen 243 instead of the silhouette. The character image 50 is a full-color character image larger than the badge 40. When the character image 50 is tapped, an episode related to the character, the history of the product brand corresponding to the character, and the like are displayed.

Next, the operation of each device constituting the display system 100 according to the present embodiment will be described.

The controller 11 of the electronic timepiece 1 calculates the number of steps taken by the user based on measurement information of the acceleration sensor of the sensor unit 15 and stores the calculated number of steps in the storage unit 12. In addition, when instructed to connect to the timepiece management application 221 by an operation via the input unit 13 or when a predetermined time arrives, the controller 11 causes the communication unit 17 to transmit the number of steps stored in the storage unit 12 to the information processing device 2. For example, the controller 11 connects to the timepiece management application 221 via Bluetooth (registered trademark) Low Energy (BLE) and transmits the number of steps and the individual ID stored in the storage unit 12 to the timepiece management application 221 via the communication unit 17. When the transmission of the number of steps is complete, the controller 11 disconnects from the timepiece management application 221 via the communication unit 17 and resets the number of steps stored in the storage unit 12 to 0. The controller 11 repeats the above process.

In the present embodiment, even when there is no acquisition request for the number of steps from the timepiece management application 221, the electronic timepiece 1 automatically transmits the number of steps stored in the storage unit 12 to the timepiece management application 221. However, the electronic timepiece 1 may transmit the number of steps to the timepiece management application 221 in response to an acquisition request for the number of steps from the timepiece management application 221. In addition, there may be a function of transmitting the number of steps from the electronic timepiece 1 to the timepiece management application 221 in response to an acquisition request from the timepiece management application 221, and a function of automatically transmitting the number of steps from the electronic timepiece 1 to the timepiece management application 221 even when there is no acquisition request from the timepiece management application 221.

In the information processing device 2, the controller 21 cooperates with the timepiece management application 221 to determine whether there is an electronic timepiece 1 attempting to connect to the timepiece management application 221 via the communication unit 25. If the controller 21 determines that there is an electronic timepiece 1 attempting to connect to the timepiece management application 221, the controller 11 establishes a communication connection with the electronic timepiece 1 via the communication unit 25 and acquires the individual ID and number of steps from the electronic timepiece 1 via the communication unit 25. Next, the controller 21 associates the acquired number of steps and individual ID with the user ID used to log in to the timepiece management application 221 and transmits them to the server 3 via the communication unit 25.

Here, in the server 3, when the number of steps is received from the information processing device 2 via the communication unit 33, the controller 31 adds the received number of steps to the number of steps corresponding to the received user ID in the step count DB 322. Furthermore, the controller 31 adds the received number of steps to the number of steps corresponding to the received user ID in the unreflected step count DB 324. When a plurality of electronic timepieces 1 are owned by the user, the number of steps stored in the step count DB 322 and the unreflected step count DB 324 is the sum of the number of steps of the plurality of electronic timepieces 1. By storing the number of steps stored in the step count DB 322 and the unreflected step count DB 324 as the sum of the number of steps of the plurality of electronic timepieces 1, the number of steps taken by the user can be accurately obtained even when a different electronic timepiece 1 is worn by the user depending on the day. In the information processing device 2, when instructed to display the badge acquisition screen 241 by an operation via the input unit 23, the controller 21, in cooperation with the timepiece management application 221, transmits a display request for the badge acquisition screen 241 together with the user ID to the server 3 via the communication unit 25.

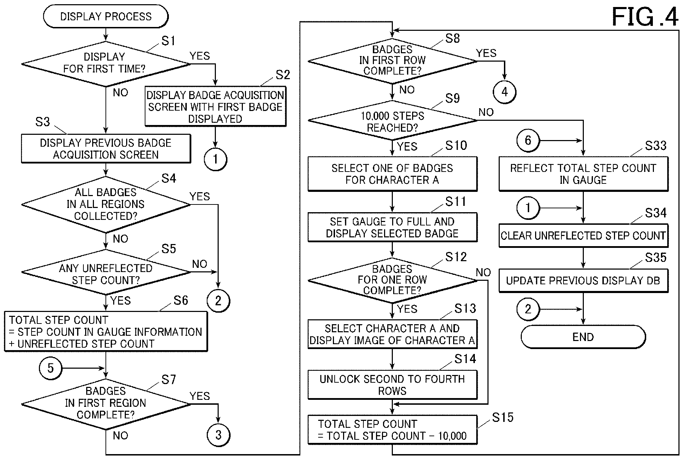

In the server 3, when the communication unit 33 receives the user ID and the display request for the badge acquisition screen 241 from the information processing device 2, the controller 31 executes a display process illustrated in FIGs. 4 to 5 in cooperation with a program stored in the storage unit 32.

In the present embodiment, every time a predetermined number of steps is reached, one badge 40 is selected from the group of 80 badges 40 described above and displayed on the badge list screen 242. When a badge 40 corresponding to any one of the group of 16 character types has been selected and displayed a predetermined number of times (for one row = five times), a character image 50 of that character is displayed on the character list screen 243. However, with 16 different character types available, collecting the predetermined number (five) of badges 40 corresponding to one character is a high hurdle for a user who has just joined the badge acquisition service. Therefore, it is conceivable that the user will stop using the service before experiencing a sense of accomplishment of acquiring a character image 50.

Therefore, in the display process, when no character image 50 is displayed on the character list screen 243 and when the controller 31 determines that the predetermined number of steps is reached, the controller 31 does not randomly select one badge 40 from the plurality of badges 40. Instead, the controller 31 selects a badge 40 corresponding to a predetermined specific character (character A in the present embodiment) and displays the badge 40 on the badge list screen 242 so that a character image 50 corresponding to the specific character is easily displayed. This makes it easy for the user to acquire the first character image 50 and allows the user to experience enjoyment and a sense of accomplishment in the badge acquisition service, thereby facilitating the user to continue using the badge acquisition service and to understand how to use the service.

In addition, when no character image 50 is displayed on the character list screen 243, the controller 31 relaxes the condition of the predetermined number of steps for displaying a badge 40 from 50,000 steps to 10,000 steps and displays the badge 40 only when the number of steps reaches 10,000 steps. This makes it even easier for the user to acquire the first character image 50.

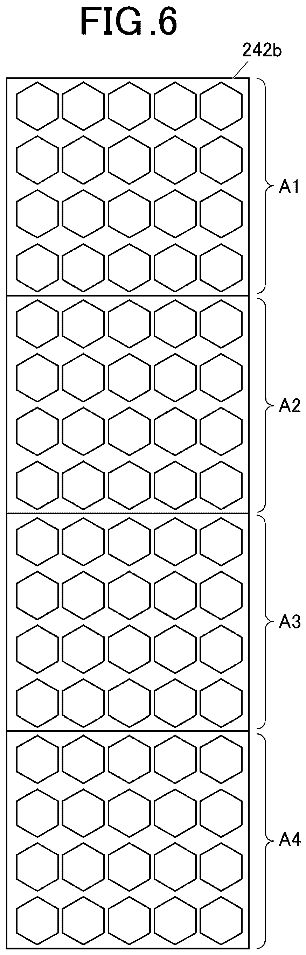

In addition, the controller 31 divides the 16 character types into a plurality of sub-groups, with a first sub-group including the specific character A mentioned above. Then, after selecting and displaying all of the badges 40 corresponding to the characters in one of the plurality of sub-groups, starting with the first sub-group, the controller 31 selects and displays the badges 40 corresponding to the characters in the next sub-group within the plurality of sub-groups. For example, as illustrated in FIG. **6****,** the squares in the badge display region 242b are divided into four regions, a first region A1 to a fourth region A4, of 5 × 4 (four rows each). Then, each time a predetermined number of steps is reached, the controller 31 randomly selects and displays (allows for display) a badge 40 corresponding to one of the four character types in the sub-group corresponding to that region, starting with the first region A1. When all the badges 40 (20 of them) in the region have been collected and all the four types of character images 50 are displayed (allowed to be displayed), the controller 31 releases the next region to allow the badges 40 of the four character types in the sub-group corresponding to the next region to be selected. This reduces the time it takes for the badge 40 corresponding to each character to be selected a predetermined number of times, thereby facilitating acquisition of the character image 50.

When the badge list screen 242 is displayed, only the released region and/or a region in which all the badges 40 have been collected may be displayed, and a region that has not yet been released (locked areas) may be hidden. For example, when the second region A2 is released, only the second region A2 may be displayed, and the first region A1, the third region A3, and the fourth region A4 may be hidden.

The display process executed by the controller 31 of the server 3 will be described below with reference to FIGs. 4 to 5. In the display process, the controller 31 first determines whether the controller 31 causes the information processing device 2 (the information processing device 2 that has transmitted a display request) to display the badge acquisition screen 241 for the first time (step S1). For example, the controller 31 determines whether the controller 31 causes the information processing device 2 to display the badge acquisition screen 241 for the first time based on whether previous display information corresponding to the received user ID is stored in the previous display DB 323.

If the controller 31 determines that the badge acquisition screen 241 is to be displayed for the first time on the information processing device 2 (step S1; YES), the controller 31 causes the display unit 24 of the information processing device 2 to display an animation indicating that a first badge has been acquired, and then causes the display unit 24 to display the badge acquisition screen 241 on which the first badge 40 is displayed on the badge list screen 242 (step S2), and advances the process to step S34.

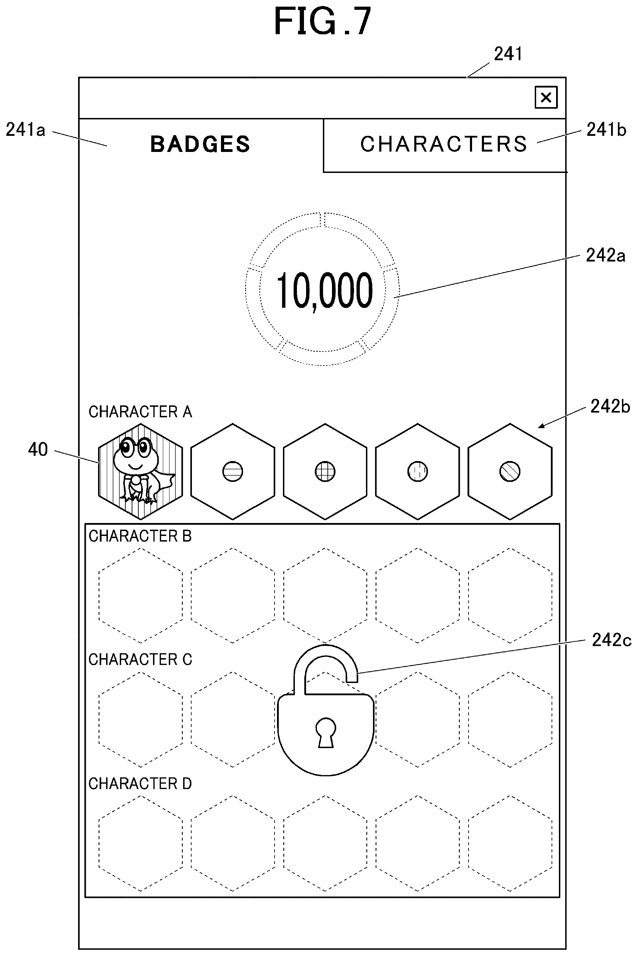

The first badge 40 is, for example, a badge 40 of a character and color corresponding to the badge at the upper left corner of the badge display region 242b. In step S2, the controller 31 causes the display unit 24 to display the badge acquisition screen 241 on which the first badge 40 is displayed at the upper left corner of the badge display region 242b, as illustrated in FIG. **7****,** and the badge list screen 242 on which a lock icon 242c is displayed in a region other than the first row. This allows the user to recognize that they have acquired their first badge 40, and that they can acquire (and display) a character image 50 by first collecting the badges 40 for one row. It should be noted that it is not essential to award the first badge 40 when the badge acquisition screen 241 is displayed for the first time.

If the controller 31 determines that the badge acquisition screen 241 is not to be displayed for the first time on the information processing device 2 (step S1; NO), the controller 31 causes the display unit 24 to display the badge acquisition screen 241 in the previously displayed state (step S3). For example, the controller 31 causes the display unit 24 to display the badge acquisition screen 241 in the previously displayed state based on the previous display information corresponding to the received user ID stored in the previous display DB 323.

Next, the controller 31 determines whether all of the badges 40 in all of the regions of the badge list screen 242 on the displayed badge acquisition screen 241 have been collected (displayed) (step S4). If the controller 31 determines that all of the badges 40 in all of the regions of the badge list screen 242 have been collected (step **4;** YES), the controller 31 ends the display process.

If the controller 31 determines that all of the badges 40 in all of the regions of the badge list screen 242 on the displayed badge acquisition screen 241 have not been collected (step S4; NO), the controller 31 determines whether there is a step count that has not been reflected on the badge acquisition screen 241 (step S5). When the unreflected step count corresponding to the received user ID stored in the unreflected step count DB 324 is not 0, the controller 31 determines that there is a step count that has not been reflected on the badge acquisition screen 241. If the controller 31 determines that there is no step count that has not been reflected on the badge acquisition screen 241 (step S5; NO), the controller 31 ends the display process.

If the controller 31 determines that there is a step count that has not been reflected on the badge acquisition screen 241 (step S5; YES), the controller 31 adds the number of steps in the gauge information and the unreflected number of steps and sets the sum as the total number of steps (variable) (step S6). That is, the controller 31 adds up the number of steps in the gauge information corresponding to the received user ID stored in the previous display DB 323 and the unreflected number of steps corresponding to the received user ID stored in the unreflected step count DB 324 and sets the sum as the total number of steps.

Next, the controller 31 determines whether all of the badges 40 in the first region A1 have been collected on the displayed badge acquisition screen 241 (step S7). That is, the controller 31 determines whether the controller 31 has selected all of the badges 40 in the first region A1. For example, the controller 31 determines whether the controller 31 has selected all of the badges 40 in the first region A1 by referring to the position information or the like of the acquired badges 40 corresponding to the received user ID stored in the previous display DB 323.

If the controller 31 determines that the controller 31 has selected all of the badges 40 in the first region A1 on the badge acquisition screen 241 displayed on the display unit 24 (step S7; NO), the controller 31 determines whether all of the badges 40 in the first row (first line) of the first region A1 have been collected (step S8). That is, the controller 31 determines whether the controller 31 has selected the badge 40 corresponding to the character A a predetermined number of times (five times in the present embodiment).

If the controller 31 determines that all of the badges 40 in the first row (first line) of the first region A1 have not been collected (step S8; NO), the controller 31 determines whether 10,000 steps have been reached (step S9). The controller 31 determines whether the 10,000 steps have been reached based on whether the total number of steps is 10,000 steps or more. If the controller 31 determines that 10,000 steps have not been reached (step S9; NO), the controller 31 advances the process to step S33.

If the controller 31 determines that 10,000 steps have been reached (step S9; YES), the controller 31 randomly selects one of the badges 40 of the character A corresponding to the first row in the badge display region 242b from among the plurality of badges 40 that have not yet been selected (displayed) (step S10). Next, the controller 31 sets the gauge 242a to FULL, causes the display unit 24 to display an animation indicating that the selected badge 40 has been acquired, and causes the selected badge 40 to be displayed at a position corresponding to the badge 40 in the badge display region 242b on the badge list screen 242 (step S11).

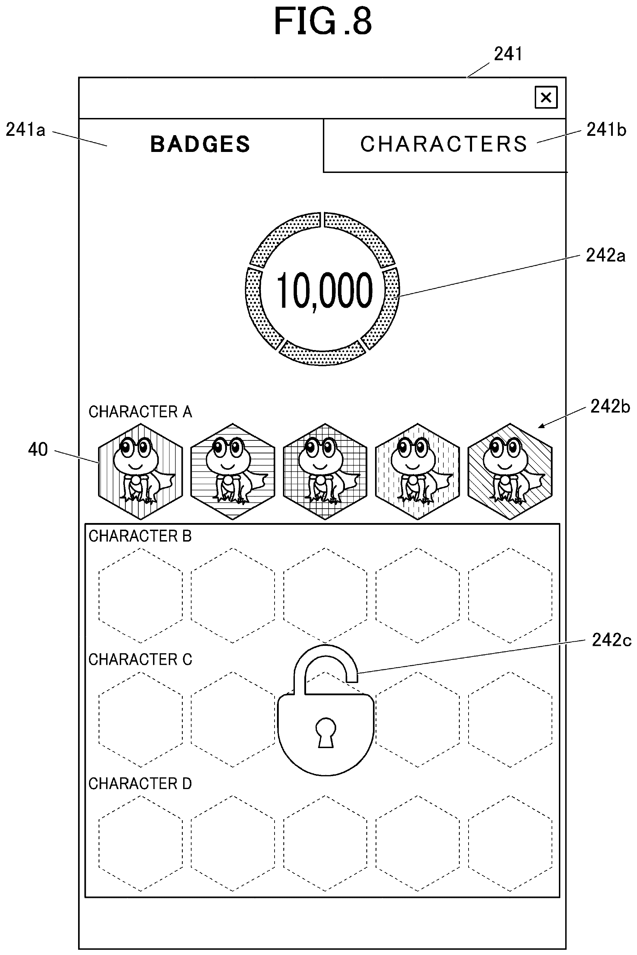

Next, the controller 31 determines whether the badges 40 of the character A have been collected for one row, as illustrated in FIG. 8 (step S12). That is, the controller 31 determines whether the controller 31 has selected the badge 40 of character A a predetermined number of times (five times in the present embodiment). If the controller 31 determines that the badges 40 of the character A have not been collected for one row (step S12; NO), the controller 31 advances the process to step S15.

If the controller 31 determines that the badges 40 of the character A have been collected for one row (step S12; YES), the controller 31 selects the character A, causes the display unit 24 to display an animation indicating that the character image 50 of the character A has been acquired, and causes the character image 50 of character A to be displayed on the character list screen 243, as illustrated in FIG. 3 (step S13). Next, the controller 31 unlocks the second to fourth rows of the first region A1 (step S14) and advances the process to step S15. In step S14, the controller 31 deletes the lock icon 242c in the second to fourth rows of the first region A1.

In step S15, the controller 31 sets a value obtained by subtracting 10,000 from the total number of steps as the total number of steps (step S15) and returns the process to step S8.

In step S8, if the controller 31 determines that all of the badges 40 in the first row (first line) of the first region A1 have been collected (step S8; YES), the controller 31 determines whether 50,000 steps have been reached (step S16). The controller 31 determines whether 50,000 steps have been reached based on whether the total number of steps is 50,000 steps or more. If the controller 31 determines that 50,000 steps have not been reached (step S16; NO), the controller 31 advances the process to step S33.

If the controller 31 determines that 50,000 steps have been reached (step S16; YES), the controller 31 randomly selects one of the badges 40 of the characters B to D corresponding to the second to fourth rows of the first region A1 from the plurality of badges 40 that have not yet been collected (step S17). Here, the controller 31 randomly selects one of the badges 40 of the characters B to D, so that the character images 50 of the characters B to D are randomly displayed on the character list screen 243.

Next, the controller 31 sets the gauge 242a to FULL, causes the display unit 24 to display an animation indicating that the selected badge 40 has been acquired, and causes the selected badge 40 to be displayed at a position corresponding to the badge 40 in the badge display region 242b on the badge list screen 242 (step S18).

Next, the controller 31 determines whether the badges 40 have been collected for one row (step S19). That is, the controller 31 determines whether the controller 31 has selected the badge 40 corresponding to the character of the selected badge 40 a predetermined number of times (five times in the present embodiment). If the controller 31 determines that the badges 40 have not been collected for one row (step S19; NO), the controller 31 advances the process to step S23.

If the controller 31 determines that the badges 40 have been collected for one row (step S19; YES), the controller 31 selects the character for which all the badges 40 have been collected, causes the display unit 24 to display an animation indicating that the character image 50 of the selected character has been acquired, and causes the character image 50 of the selected character to be displayed on the character list screen 243 (step S20).

Next, the controller 31 determines whether all the badges 40 in the second to fourth rows of the first region A1 have been collected (step S21). If the controller 31 determines that all the badges 40 in the second to fourth rows of the first region A1 have not been collected (step S21; NO), the controller 31 advances the process to step S23. If the controller 31 determines that all the badges 40 in the second to fourth rows of the first region A1 have been collected (step S21; YES), the controller 31 releases (unlocks) the second region A2 (step S22) and advances the process to step S23.

In step S23, the controller 31 sets a value obtained by subtracting 50,000 from the total number of steps as the total number of steps (step S23) and returns the process to step S7.

In step S7, if the controller 31 determines that all of the badges 40 in the first region A1 have been collected (step S7; YES), the controller 31 determines whether 50,000 steps have been reached (step S24). The controller 31 determines whether 50,000 steps have been reached based on whether the total number of steps is 50,000 steps or more. If the controller 31 determines that 50,000 steps have not been reached (step S24; NO), the controller 31 advances the process to step S33.

If the controller 31 determines that 50,000 steps have been reached (step S24; YES), the controller 31 randomly selects one of the badges 40 that corresponds to the released region from among the plurality of badges 40 that have not yet been collected (step S25). Here, the controller 31 randomly selects one of the badges 40 in the released region, so that the character images 50 of the characters corresponding to the released region are randomly displayed on the character list screen 243.

Next, the controller 31 sets the gauge 242a to FULL, causes the display unit 24 to display an animation indicating that the selected badge 40 has been acquired, and causes the selected badge 40 to be displayed at a position corresponding to the badge 40 in the badge display region 242b on the badge list screen 242 (step S26).

Next, the controller 31 determines whether the badges 40 have been collected for one row (step S27). That is, the controller 31 determines whether the controller 31 has selected the badge 40 corresponding to the character of the selected badge 40 a predetermined number of times (five times in the present embodiment). If the controller 31 determines that the badges 40 have not been collected for one row (step S27; NO), the controller 31 advances the process to step S32.

If the controller 31 determines that the badges 40 have been collected for one row (step S27; YES), the controller 31 selects the character for which all the badges 40 have been collected, causes the display unit 24 to display an animation indicating that the character image 50 of the selected character has been acquired, and causes the character image 50 of the selected character to be displayed on the character list screen 243 (step S28).

Next, the controller 31 determines whether all of the badges 40 in the released region have been collected (step S29). If the controller 31 determines that all of the badges 40 in the released region have not been collected (step S29; NO), the controller 31 advances the process to step S32. If the controller 31 determines that all of the badges 40 in the released region have been collected (step S29; YES), the controller 31 determines whether all of the regions from the first region A1 to the fourth region A4 have been released (step S30). If the controller 31 determines that all of the regions have not been released (step S30; NO), the controller 31 releases the next region (step S31) and advances the process to step S32.

In step S32, the controller 31 sets a value obtained by subtracting 50,000 from the total number of steps as the total number of steps (step S32) and returns the process to step S7.

In step S30, if the controller 31 determines that all of the first region A1 to the fourth region A4 have been released (step S30; YES), the controller 31 advances the process to step S34.

In step S33, the controller 31 reflects the total number of steps in the display of the gauge 242a (step S33). Next, the controller 31 deletes the step count corresponding to the user ID transmitted from the information processing device 2 in the unreflected step count DB 324 (step S34). Next, the controller 31 updates the previous display information (gauge information, position information on the acquired badge 40, information on the released region, information on the acquired character image 50, and/or the like) in the previous display DB 323 corresponding to the user ID transmitted from the information processing device 2 according to the current display of the badge acquisition screen 241 (step S35) and ends the display process.

As described above, when the controller 31 of the server 3 determines that the number of steps taken by the user measured by the electronic timepiece 1 has reached a predetermined number of steps (first condition), the controller 31 randomly selects one badge 40 from the group of badges 40 and allows the selected badge 40 to be displayed on the badge list screen 242. When the controller 31 of the server 3 has selected a badge 40 corresponding to any one of the characters included in the group of characters a predetermined number of times (when a second condition is satisfied), the controller 31 of the server 3 selects the character corresponding to the badge 40 and allows the character image 50 to be displayed on the character list screen 243. In a case where none of the character images 50 is allowed to be displayed on the character list screen 243, when the controller 31 determines that a predetermined number of steps has been reached and selects one badge 40, the controller 31 selects a badge 40 (specific icon) corresponding to a predetermined specific character (specific symbol) from the group of characters. This makes it easy for the user to display (acquire) the first character image 50, thereby facilitating the user to continue using the badge acquisition service.

In addition, when the user owns a plurality of electronic timepieces 1, the controller 31 randomly selects one badge 40 from the group of badges 40 and displays the selected badge 40 on the badge list screen 242 each time the sum of the number of steps of the user measured by the plurality of electronic timepieces 1 reaches a predetermined number of steps. Therefore, no matter which electronic timepiece 1 the user wears while walking, the number of steps can be included in the number of steps required to display the badge 40.

In addition, the predetermined number of steps (10,000 steps) used for the determination when none of the character images 50 is allowed to be displayed on the character list screen 243 is set to a more reachable number of steps than the predetermined number of steps (50,000 steps) used for the determination after any one or more of the character images 50 have been allowed to be displayed on the character list screen 243. This makes it easier for the user to display the first character image 50, thereby further facilitating the user to continue using the badge acquisition service.

In addition, the controller 31 divides the group of 16 character types into a plurality of sub-groups, with a first sub-group including the specific character, and after selecting all of the badges 40 corresponding to the characters in one of the plurality of sub-groups, starting with the first sub-group, the controller 31 selects the badges 40 corresponding to the characters in the next sub-group within the plurality of sub-groups. Therefore, the time it takes for the badge 40 corresponding to each character to be selected a predetermined number of times can be reduced. This makes it easy for the user to display a character image 50, thereby further facilitating the user to continue using the badge acquisition service.

In addition, when none of the characters in the group of characters is allowed to be displayed on the character list screen 243, the controller 31 displays the lock icon 242c indicating that icon display is locked in a region in which the badges 40 corresponding to the characters other than the specific character (character A) are to be displayed on the badge list screen 242. Therefore, the user can recognize that they can acquire (and display) a character image 50 by first collecting a predetermined number of badges 40 of the specific character (character A) on the badge list screen 242. This reduces a psychological hurdle for the user that they have to collect a large number of badges 40, thereby facilitating the user to continue using the badge acquisition service.

In addition, on the character list screen 243, the positions at which the characters of the group of 16 character types are displayed are preset, and after allowing the first character to be displayed on the character list screen 243, the controller 31 selects badges 40 so that character images 50 are randomly displayed on the character list screen 243. Therefore, the user can enjoy predicting and anticipating which character will be displayed next.

Note that the description of the above embodiment is a preferred example of an embodiment relating to the control method, server, information processing device, display system, and program according to the present invention, and the present invention is not limited thereto.

For example, in the above embodiment, the controller 31 displays a badge 40 every time 10,000 steps are reached until the controller 31 has selected the badge 40 corresponding to the first character a predetermined number of times and displays the first character image 50, and after the controller 31 displays the first character image 50 on the character list screen 243, the controller 31 displays a badge 40 every time 50,000 steps are reached. However, the number of steps serving as a condition for displaying a badge 40 may be increased stepwise as the number of character images 50 that have been allowed to be displayed on the character list screen 243 increases. For example, the condition may be 10,000 steps until the character images 50 of all the characters in the first sub-group are displayed, then 20,000 steps until the character images 50 of all the characters in the second sub-group are displayed, then 30,000 steps until the character images 50 of all the characters in the third sub-group are displayed, and then 50,000 steps until the character images 50 of all the characters in the fourth sub-group are displayed. Thus, by gradually tightening the condition for acquiring a character image 50, it becomes possible to facilitate the user to continue using the badge acquisition service.

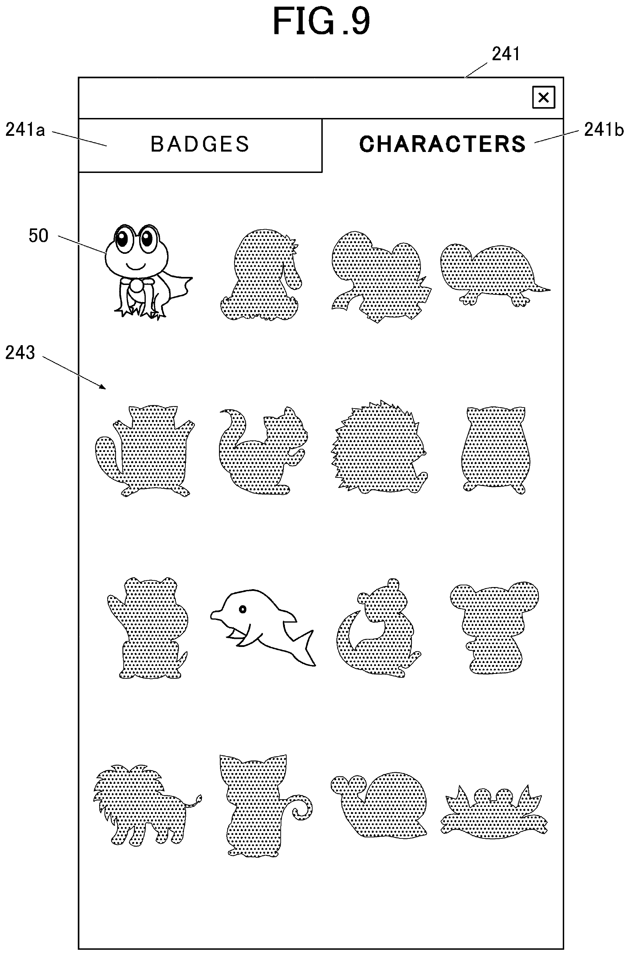

In the above embodiment, as illustrated in FIG. 3, the arrangement order of the positions at which the character images 50 of characters A to P are displayed on the character list screen 243 is the same as the arrangement order of the positions at which the badges 40 corresponding to the characters are displayed on the badge list screen 242. In this case, it is easy for the user to predict which character image 50 will be displayed next on the character list screen 243. For example, after the character A is displayed, it is easy to predict that one of the characters B to D will be displayed next. Therefore, as illustrated in FIG. 9, it is preferable that the positions at which the characters are displayed on the character list screen 243 are randomly arranged, rather than being arranged in order as in FIG 3. That is, it is preferable that the positions at which the characters are displayed on the character list screen 243 are in an arrangement order that does not correspond to the arrangement order of the positions at which the badges 40 corresponding to the characters are displayed on the badge list screen 242. As a result, as illustrated in FIG. **9****,** the character images 50 are displayed randomly on the character list screen 243, making it difficult for the user to predict the order in which the character images 50 will be acquired, providing the user with a sense of fun that is characteristic of games.

In the above embodiment, the second condition is that the controller 31 has selected a badge 40 corresponding to the same character a predetermined number of times, and when this condition is satisfied, the controller 31 can select the character corresponding to the badge 40 and display the character on the character list screen 243. However, the second condition is not limited thereto. For example, when the background color of a badge 40 corresponding to one character changes from black to white to copper to silver to gold each time the controller 31 selects the badge 40, the second condition may be that the controller 31 has selected a badge 40 with a gold background.

In the above embodiment, the server 3 includes a single server. However, the server 3 may include a plurality of servers.

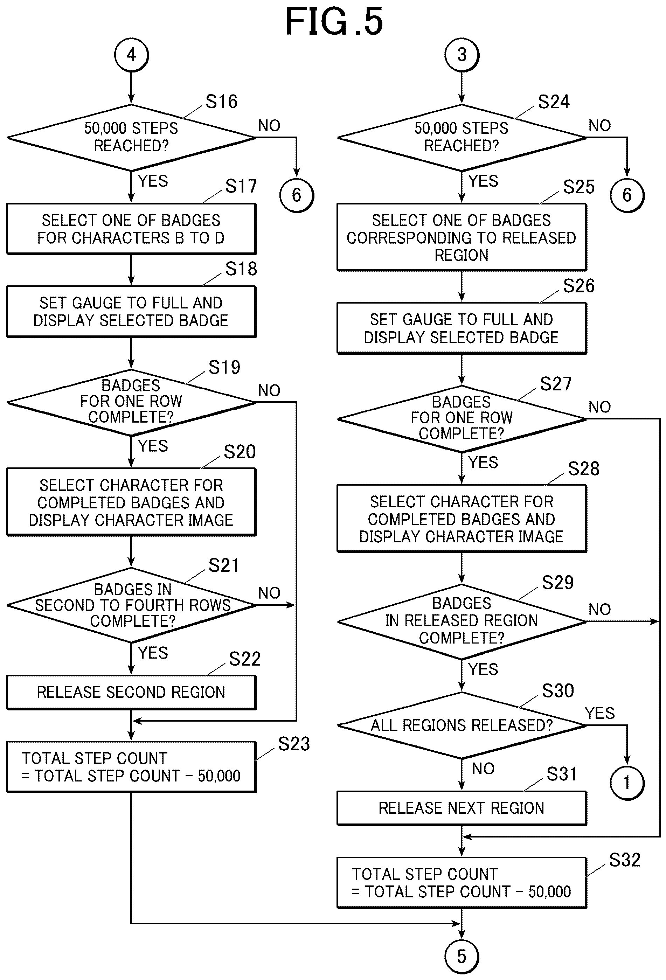

In the above embodiment, the controller 31 of the server 3 executes the display process to display the badge acquisition screen 241 on the information processing device 2 as a terminal device. However, the information processing device 2 may execute the display process illustrated in FIGs. 4 to 5 to display the badge acquisition screen 241 on the display unit 24. That is, the storage unit 22 of the information processing device 2 may store a program (application) for causing the controller 21 to execute the display process illustrated in FIGs. 4 to 5, as well as information corresponding to the user of the information processing device 2 that is stored in the previous display DB 323 and the unreflected step count DB 324. Then, the controller 21 may execute the display process illustrated in FIGs. 4 and 5 in cooperation with the above program to cause the display unit 24 to display the badge acquisition screen 241.

In the above embodiment, Bluetooth is used for communication between the electronic timepiece 1 and the information processing device 2, but other communication methods may also be used.

In the above embodiment, the external device of the present invention is described as being the electronic timepiece 1, but the external device is not limited to an electronic timepiece and may be other electronic devices.

In the above embodiment, a badge is used as an example of an icon, and a character is used as an example of a symbol, but the icon and the symbol are not limited thereto.

In addition, the icon and symbol acquired through the badge acquisition service may be NFT data that has been given uniqueness by combining it with blockchain technology.

In the above embodiment, a badge (icon) can be acquired when a step count condition is satisfied. However, the condition for acquiring a badge is not limited to the step count and may be other conditions, such as walking distance, running distance, etc.

In the above embodiment, the badge list screen 242 as the first screen and the character list screen 243 as the second screen are separated by tabs. However, both the first screen and the second screen may be displayed on a single screen. In other words, one screen may be divided into a first display region and a second display region, with the first display region being the first screen and the second display region being the second screen.

In the above description, an example has been disclosed in which a semiconductor memory, HDD, or the like is used as a computer-readable medium for the program according to the present invention, but the present invention is not limited to this example. As another computer-readable medium, a portable recording medium such as a CD-ROM can be used. In addition, a carrier wave is also applied as a medium for providing data of the program according to the present invention via a communication line.

Although the embodiments and modifications of the present invention have been described above, the scope of the present invention is not limited to the above-described embodiments and modifications and includes the scope of the invention described in the claims and equivalents thereof.

## Claims

1. A method executed by a computer for controlling a display device 2 that includes
a first screen 242 displaying a list of icons 40 included in a group of icons 40 and
a second screen 243 displaying a list of symbols 50 included in a group of symbols 50,
the method comprising:
determining as to whether a first condition is satisfied, and
in response to the first condition being satisfied,
selecting one icon 40 from the group of icons 40 and
allowing the selected icon 40 to be displayed on the first screen 242; and
determining as to whether a second condition related to selecting the icon 40 is satisfied, and
in response to the second condition being satisfied,
selecting a symbol 50 corresponding to the selected icon 40 and
allowing the selected symbol 50 to be displayed on the second screen 243, wherein:
when none of the symbols 50 in the group of symbols 50 is allowed to be displayed on the second screen 243, the selecting one icon includes selecting a specific icon 40 corresponding to a predetermined specific symbol 50 in the group of symbols 50; and
when one or more of the symbols 50 in the group of symbols 50 are allowed to be displayed on the second screen 243, the selecting one icon includes randomly selecting an icon 40.

2. The method according to claim 1, wherein the second condition is satisfied when an icon 40 corresponding to any one of the symbols 50 included in the group of symbols 50 has been selected a predetermined number of times.

3. The method according to claim 1 or 2, wherein
the display device 2 includes a terminal device 2,
the method further comprises: acquiring by the computer, from the terminal device 2, a number of steps taken by a user of the terminal device 2, and
the first condition is satisfied each time the number of steps taken by the user acquired in the acquiring reaches a predetermined number of steps.

4. The method according to claim 3, wherein
the acquiring includes acquiring, from the terminal device 2, the number of steps that is acquired by the terminal device 2 from a plurality of electronic devices 1 owned by the user, and
the first condition is satisfied each time a sum of the number of steps taken by the user acquired in the acquiring reaches a predetermined number of steps.

5. The method according to claim 3 or 4, wherein the predetermined number of steps increases as a number of symbols 50 that is allowed to be displayed on the second screen 243 increases.

6. The method according to any one of claims 1 to **5,** wherein the first condition that is used when none of the symbols 50 in the group of symbols 50 is allowed to be displayed on the second screen 243 is a more reachable condition than the first condition that is used when one or more of the symbols 50 in the group of symbols 50 are allowed to be displayed on the second screen 243.

7. The method according to any one of claims 1 to **6,** wherein
the group of symbols 50 is divided into a plurality of sub-groups, with a first sub-group including the predetermined specific symbol 50, and
the selecting one icon includes, after selecting all of the icons 40 corresponding to the symbols 50 in one of the plurality of sub-groups, starting with the first sub-group, selecting an icon 40 corresponding to a symbol 50 in a next sub-group within the plurality of sub-groups.

8. The method according to any one of claims 1 to 7, wherein
the first screen 242 includes a region that displays an icon 40 corresponding to each symbol 50 in the group of symbols 50 in sequence, and
the method further comprises, when none of the symbols 50 in the group of symbols 50 is allowed to be displayed on the second screen 243, displaying a lock icon 242c that indicates that icon display is locked in a region in which an icon 40 corresponding to a symbol 50 other than the predetermined specific symbol 50 is to be displayed on the first screen 242.

9. The method according to any one of claims 1 to 8, wherein
a position at which each symbol 50 in the group of symbols 50 is displayed on the second screen 243 is preset, and
the method further comprises, after selecting the predetermined specific symbol 50 and allowing the selected symbol 50 to be displayed on the second screen 243, selecting an icon 40 from the group of icons 40 so that two or more of the symbols 50 are randomly displayed on the second screen 243.

10. The method according to any one of claims 1 to 9, wherein an arrangement order of positions at which respective symbols 50 in the group of symbols 50 are displayed on the second screen 243 does not correspond to an arrangement order of positions at which respective icons 40 corresponding to the respective symbols 50 in the group of symbols 50 are displayed on the first screen 242.

11. A server 3 comprising a controller 31 that controls a terminal device 2 that includes
a first screen 242 displaying a list of icons 40 included in a group of icons 40 and
a second screen 243 displaying a list of symbols 50 included in a group of symbols 50 such that:
the controller 31
determines as to whether a first condition is satisfied, and
in response to the first condition being satisfied,
selects one icon 40 from the group of icons 40 and
allows the selected icon 40 to be displayed on the first screen 242; and
the controller 31
determines as to whether a second condition related to selecting the icon 40 is satisfied, and
in response to the second condition being satisfied,
selects a symbol 50 corresponding to the selected icon 40 and
allows the selected symbol 50 to be displayed on the second screen 243, wherein:
when the controller 31 allows none of the symbols 50 in the group of symbols 50 to be displayed on the second screen 243, the controller 31 selects a specific icon 40 corresponding to a predetermined specific symbol 50 in the group of symbols 50; and
when the controller 31 allows one or more of the symbols 50 in the group of symbols 50 to be displayed on the second screen 243, the controller 31 randomly selects an icon 40.

12. An information processing device 2 comprising:
a display 24 that includes
a first screen 242 displaying a list of icons 40 included in a group of icons 40 and
a second screen 243 displaying a list of symbols 50 included in a group of symbols 50; and
a controller 21 that controls the display 24 such that:
the controller 21
determines as to whether a first condition is satisfied, and
in response to the first condition being satisfied,
selects one icon 40 from the group of icons 40 and
allows the selected icon 40 to be displayed on the first screen 242; and
the controller 21
determines as to whether a second condition related to selecting the icon 40 is satisfied, and
in response to the second condition being satisfied,
selects a symbol 50 corresponding to the selected icon 40 and
allows the selected symbol 50 to be displayed on the second screen 243, wherein:
when the controller 21 allows none of the symbols 50 in the group of symbols 50 to be displayed on the second screen 243, the controller 21 selects a specific icon 40 corresponding to a predetermined specific symbol 50 in the group of symbols 50; and
when the controller 21 allows one or more of the symbols 50 in the group of symbols 50 to be displayed on the second screen 243, the controller 21 randomly selects an icon 40.

13. A display system 100 comprising:
a terminal device 2 that includes
a first screen 242 displaying a list of icons 40 included in a group of icons 40 and
a second screen 243 displaying a list of symbols 50 included in a group of symbols 50; and
a server 3 that controls the terminal device 2 such that:
the server 3
determines as to whether a first condition is satisfied, and
in response to the first condition being satisfied,
selects one icon 40 from the group of icons 40 and
allows the selected icon 40 to be displayed on the first screen 242; and
the server 3
determines as to whether a second condition related to selecting the icon 40 is satisfied, and
in response to the second condition being satisfied,
selects a symbol 50 corresponding to the selected icon 40 and
allows the selected symbol 50 to be displayed on the second screen 243, wherein:
when the server 3 allows none of the symbols 50 in the group of symbols 50 to be displayed on the second screen 243, the server 3 selects a specific icon 40 corresponding to a predetermined specific symbol 50 in the group of symbols 50; and
when the server 3 allows one or more of the symbols 50 in the group of symbols 50 to be displayed on the second screen 243, the server 3 randomly selects an icon 40.

14. A program causing a computer to control a terminal device 2 that includes
a first screen 242 displaying a list of icons 40 included in a group of icons 40 and
a second screen 243 displaying a list of symbols 50 included in a group of symbols 50 such that:
the computer
determines as to whether a first condition is satisfied, and
in response to the first condition being satisfied,
selects one icon 40 from the group of icons 40 and
allows the selected icon 40 to be displayed on the first screen 242; and
the computer
determines as to whether a second condition related to selecting the icon 40 is satisfied, and
in response to the second condition being satisfied,
selects a symbol 50 corresponding to the selected icon 40 and
allows the selected symbol 50 to be displayed on the second screen 243, wherein:
when the computer allows none of the symbols 50 in the group of symbols 50 to be displayed on the second screen 243, the computer selects a specific icon 40 corresponding to a predetermined specific symbol 50 in the group of symbols 50; and
when the computer allows one or more of the symbols 50 in the group of symbols 50 to be displayed on the second screen 243, the computer randomly selects an icon 40.
